(19) Europäisches Patentamt
European Patent Office
Office européen des brevets

(11) Veröffentlichungsnummer: **0 438 698 A2**

(12) **EUROPÄISCHE PATENTANMELDUNG**

(21) Anmeldenummer: **90123879.0**

(22) Anmeldetag: **12.12.90**

(51) Int. Cl.5: **C08G 63/682**, C08G 63/64, C08K 3/30, C08K 3/38

(30) Priorität: **24.01.90 DE 4001934**

(43) Veröffentlichungstag der Anmeldung: **31.07.91 Patentblatt 91/31**

(84) Benannte Vertragsstaaten: **BE CH DE FR GB IT LI NL**

(71) Anmelder: **BAYER AG**

**W-5090 Leverkusen 1 Bayerwerk(DE)**

(72) Erfinder: **Weider, Richard, Dr.**
**Quettinger Strasse 78**
**W-5090 Leverkusen 3(DE)**
Erfinder: **Negele, Michael, Dr.**
**Wolfskaul 6**
**W-5000 Köln 80(DE)**

(54) **Aromatische Polyester und Polyestercarbonate mit spezieller fluorhaltiger Bisphenolkomponente, deren Herstellung und deren Verwendung.**

(57) Neue aromatische Polyester und Polyestercarbonate enthalten in ihrem Bisphenolanteil zumindest teilweise Bisphenole des Typs 1,1-Bis-hydroxyphenyl-hexafluordichlor-, -heptafluarmonochlor- oder -octafluor-cyclopentan.

EP 0 438 698 A2

# AROMATISCHE POLYESTER UND POLYESTERCARBONATE MIT SPEZIELLER FLUORHALTIGER BISPHENOLKOMPONENTE, DEREN HERSTELLUNG UND DEREN VERWENDUNG

Die vorliegende Erfindung betrifft neue aromatische Polyester und Polyestercarbonate mit einer speziellen fluorhaltigen Bisphenolkomponente, deren Herstellung und deren Verwendung.

Aromatische Polyester mit fluorhaltiger Bisphenolkomponente sind bereits bekannt geworden (siehe US-PS'en 3 388 097 und 3 824 211). Soweit dabei Bisphenolkomponenten einen perfluorierten Cycloalkylrest enthalten können sind sie bislang nur mit über 10 % meta-Phenylensäurechloriden (Isophthalsäuredichlorid) umgesetzt worden (siehe US-PS 3 388 097). Der Einsatz von perfluorierten Cycloalkylenresten enthaltenden Bisphenolkomponenten a) im Gemisch mit fluorfreien Bisphenolen und b) zur Herstellung von Polyestercarbonaten ist nicht bekannt. Die Eigenschaften der in der US-PS 3 388 097 beschriebenen Polyester sind noch verbesserungsbedürftig, insbesondere hinsichtlich Löslichkeit, optischer Parameter, Wärmeformbeständigkeit und thermischer Stabilität. Außerdem hat sich gezeigt, daß perfluorierte Cycloalkylenreste enthaltende Bisphenole sich nach der in der US-PS 3 388 097, Beispiel 1, beschriebenen Methode nicht mehr herstellen lassen, wenn man statt des dort eingesetzten Perfluorcyclobutanons auf Perfluorcyclopentanon übergeht. Polyester und Polyestercarbonate mit Bisphenolkomponenten, die eine perfluorierte Cyclopentylengruppe enthalten, sind bisher also nicht zugänglich.

Es wurden nun aromatische Polyester und Polyestercarbonate der Formel (I) gefunden,

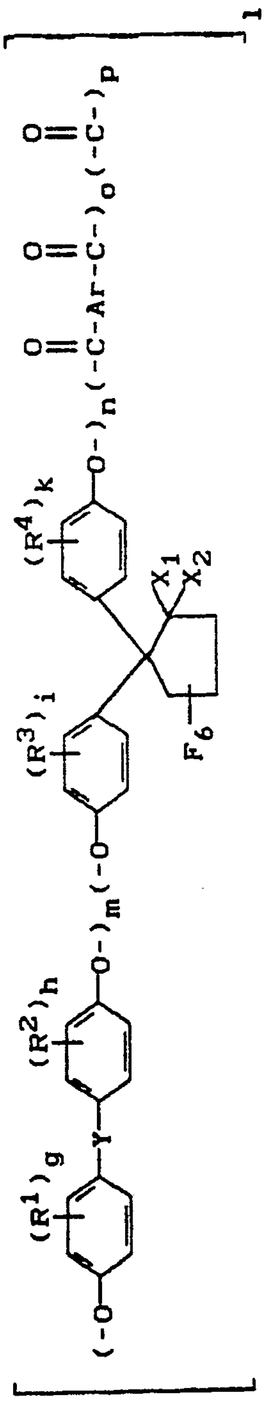

(I)

in der

| | |
|---|---|
| l | für eine ganze Zahl von 2 bis 100 steht, |
| m, n, o und p | für die Molzahlen der jeweiligen Komponenten stehen und folgende Bedingungen erfüllen |

$$p + o = m + n$$
$$p : (o + p) = 0 \text{ bis } 0{,}8$$
$$n : (m + n) = 0{,}001 \text{ bis } 1$$

| | |
|---|---|
| Y | für eine Einfachbindung, einen $C_1$-$C_7$-Alkylenrest, einen $C_1$-$C_7$-Alkylidenrest, einen $C_5$-$C_{12}$-Cycloalkylenrest, einen $C_5$-$C_{12}$-Cycloalkylidenrest, einen $C_6$-$C_{14}$-Alkylcycloalkyli- |

denrest, Sauerstoff, Schwefel, S = O, $SO_2$ oder C = O steht,

$X_1$ und $X_2$ unabhängig voneinander für Fluor oder Chlor stehen,

$R^1$ bis $R^4$ unabhängig voneinander für je eine $C_1$-$C_4$-Alkylgruppe oder ein Halogenatom stehen,

g bis k unabhängig voneinander Null oder eine ganze Zahl von 1 bis 4 bedeuten und

Ar meta- und/oder para-Phenylen bedeutet, wobei der Anteil an meta-Phenylen kleiner ist als 10 %, wenn m und p gleichzeitig Null sind.

In Fällen, in denen m und p nicht gleichzeitig Null sind kann das Mol-Verhältnis von meta- zu para-Phenylen in Ar beispielsweise 0:1 bis 1:0 betragen. Bevorzugt beträgt dieses Verhältnis 3:7 bis 7:3, besonders bevorzugt ist es 1:1.

Es ist ein wesentliches Merkmal erfindungsgemäßer Polyester und Polyestercarbonate, daß ihr Bisphenolanteil zumindest teilweise aus Bisphenolen des Typs 1,1-Bis-hydroxyphenyl-hexafluordichlor-, -heptafluormonochlor- oder -octafluorcyclopentan stammt.

Bevorzugte Polyester der Formel (I) sind dadurch gekennzeichnet, daß

l für eine ganze Zahl von 15 bis 100 und

p für Null stehen,

m, n und o für die Molzahlen der jeweiligen Komponenten stehen und folgende Bedingungen erfüllen

$$o = m + n$$
$$n : (m + n) = 0{,}05 \text{ bis } 0{,}99,$$

Y die oben angegebene Bedeutung hat,

$X_1$ und $X_2$ für Fluor stehen,

$R^1$, $R^2$, g und h die oben angegebene Bedeutung haben,

i und k für Null stehen und

Ar meta- und/oder para-Phenylen bedeutet, wobei das Mol-Verhältnis von meta- zu para-Phenylen im Bereich 7:3 bis 3:7 liegt.

Bevorzugte Polyestercarbonate der Formel (I) sind dadurch gekennzeichnet, daß

l für eine ganze Zahl von 15 bis 100 und

m, n, o und p für die Molzahl der jeweiligen Komponente stehen und folgende Bedingungen erfüllen

$$p + o = m + n$$
$$p : (o + p) = 0{,}01 \text{ bis } 0{,}5$$
$$n : (n + m) = 0{,}05 \text{ bis } 1,$$

Y die oben angegebene Bedeutung hat,

$X_1$ und $X_2$ für Fluor stehen und

$R^1$, $R^2$, g und h die oben angegebene Bedeutung haben,

i und k für Null stehen und

Ar meta- und/oder para-Phenylen bedeutet, wobei das Mol-Verhältnis von meta- zu para-Phenylen im Bereich 7:3 bis 3:7 liegt.

Die erfindungsgemäßen Polyester und Polyestercarbonate können, soweit sie a) verschiedene Bisphenolkomponenten und/oder b) verschiedene

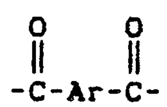 und 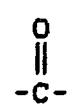

Komponenten enthalten, die jeweils unter a) und b) genannten Komponenten in Form von Blöcken oder in statistischer Verteilung enthalten.

Die vorliegende Erfindung betrifft weiterhin ein Verfahren zur Herstellung von Polyestern und Polyestercarbonaten der Formel (I), das dadurch gekennzeichnet ist, daß man nach dem Zweiphasengrenzflächenverfahren n Mole Bisphenole der Formel (II)

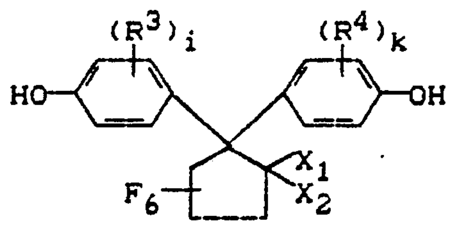

(II),

in der die verwendeten Symbole die bei Formel (I) angegebene Bedeutung haben,
gegebenenfalls unter Zusatz von m Molen Bisphenolen der Formel (III)

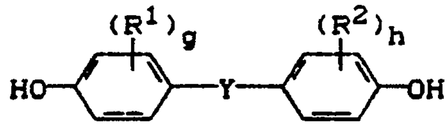

(III),

in der die verwendeten Symbole die bei Formel (I) angegebene Bedeutung haben,
in wäßrig-alkalischer Phase mit o Molen Iso- und/oder Terephthalsäuredichlorid, wobei der Anteil an Isophthalsäuredichlorid dann kleiner ist als 10 Mol-%, wenn m und p gleichzeitig Null sind,
gegebenenfalls unter Zusatz von p Molen Phosgen,
sowie gegebenenfalls unter Zusatz von Katalysatoren, Kettenabbrechern, Farbverbesserern und/oder Verzweigungsmitteln
in organischer Phase miteinander umsetzt und dabei die Bedingungen einhält

$p + o = m + n$
$p: (o + p) = 0$ bis 0,8
$n: (m + n) = 0{,}001$ bis 1.

Das Zweiphasengrenzflächenverfahren ist ein bekanntes Verfahren zur Herstellung von Polyester und Polyestercarbonaten. Einzelheiten sind z.B. in der DE-OS 2 940 024 und der DE-OS 3 007 934 angegeben.

Das Bisphenol der Formel (II) ist besonders bevorzugt, bei dem $X_1$ und $X_2$ für Fluor und i und k für Null stehen.

Bisphenole der Formel (II) können erhalten werden, indem man ein fluorhaltiges Cyclopentanon der Formel (IIa)

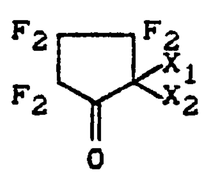

(IIa),

in der
$X_1$ und $X_2$ unabhängig voneinander für Fluor oder Chlor stehen,
mit mindestens der 2-fachen molaren Menge einer oder mehrerer Arylverbindungen der Formel (IIb)

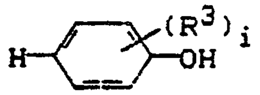

(IIb),

in der

$R^3$ für eine $C_1$-$C_4$-Alkylgruppe oder ein Halogenatom und

i für Null oder eine ganze Zahl von 1 bis 4 stehen,

in Gegenwart von wasserfreier Flußsäure umsetzt.

Fluorhaltige Cyclopentanone der Formel (IIa) sind beispielsweise gemäß J. Org. Chem. 33, 2693 (1968) oder den US-PS en 3 129 248, 3 341 602 und 3 321 515 zugänglich. Die Bisphenole der Formel (II) und ein Verfahren zu ihrer Herstellung sind von einer eigenen separaten Patentanmeldung umfaßt.

Bisphenole der Formel (III) sind bekannt. Als Beispiele seien genannt Dihydroxydiphenyle, Bis-(hydroxyphenyl)-alkane, -cycloalkane, -sulfide, -ether, -ketone, -sulfoxide und -sulfone und deren kern-$C_1$-$C_4$-alkylierte und kernhalogenierte Derivate. Bevorzugte Bisphenole der Formel (III) sind: Bisphenol A, Tetramethyl-bisphenol A, 1,1-Bis-(4-hydroxyphenyl)-isobutan, 1,1-Bis-(4-hydroxyphenyl)-cyclohexan, 1,1-Bis-(4-hydroxyphenyl)-3,3,5-tri-methyl-cyclohexan, 4,4'-Dihydroxydiphenylsulfid, 4,4'-Dihydroxydiphenylsulfon und deren im Kern di- bis tetrahalogenierten Derivate. Es können auch beliebige Mischungen verschiedener Bisphenole der Formel (III) verwendet werden. Besonders bevorzugt ist Bisphenol A.

Die Bisphenole der Formeln (II) und gegebenenfalls (III) werden in einer wäßrig-alkalischen Phase gelöst, der man gegebenenfalls Farbverbesserer zufügen kann. Farbverbesserer können z.B. reduzierende Verbindungen sein, wie Natriumborhydrid oder Natriumhydrogensulfit, die z.B. in Mengen von 0,1 bis 10 Gew.-%, bezogen auf die Summe der Bisphenole, eingesetzt werden können.

Weiterhin kann man der wäßrig-alkalischen Phase gegebenenfalls Katalysatoren hinzufügen. Als Beispiele seien genannt: quarternäre Ammoniumverbindungen, quarternäre Phosphoniumverbindungen und tertiäre Amine. Diese können z.B. in Mengen von 0,5 bis 5 Mol-%, bezogen auf die Summe der Bisphenole, eingesetzt werden.

Zur Durchführung des Zweiphasengrenzflächenverfahrens fügt man dann ein mit der wäßrig-alkalischen Phase nicht mischbares organisches Lösungsmittel zu, beispielsweise Dichlormethan, Chloroform, Trichlorethylen, Tetrachlorethylen, Tetrachlorethan, Chlorbenzol, Dichlorbenzole oder Gemische davon.

Das Iso- und/oder Terephthalsäuredichlorid kann gelöst in einem der oben beschriebenen, mit der wäßrig-alkalischen Phase nicht mischbaren Lösungsmittel eingesetzt werden.

Als gegebenenfalls einzusetzende Kettenabbrecher kommen z.B. Phenol, $C_1$-$C_{12}$-Alkyl-phenole, halogenierte Phenole, Hydroxydiphenyl, Naphthole und Chlorkohlensäureester solcher phenolischer Verbindungen in Frage, aber auch Chloride von aromatischen Monocarbonsäuren, die gegebenenfalls mit $C_1$-$C_{12}$-Alkylgruppen und/oder Halogenatomen substituiert sein können. Kettenabbrecher können z.B. in Mengen von 0,1 bis 10 Mol-% bezogen auf eingesetzte Bisphenole (bei phenolischen Typen) oder bezogen auf eingesetzte Iso- und Terephthalsäuredichloride (bei Monocarbonsäurechlorid-Typen) eingesetzt werden. Ihr Zusatz kann vor oder während der Reaktion erfolgen, beispielsweise zusammen mit dem oder den Bisphenolen, zusammen mit dem Iso- und/oder Terephthalsäuredichlorid, während der Reaktion getrennt von den Reaktanden und/oder nach der Herstellung eines Vorkondensates. Kettenabbrecher vom Monocarbonsäurechlorid- oder Chlorkohlensäureester-Typ werden vorzugsweise zusammen mit Iso- und/oder Terephthalsäuredichlorid eingesetzt und/oder zusammen mit Phosgen. Ihr Zusatz kann auch noch erfolgen, wenn Iso- und/oder Terephthalsäuredichlorid und/oder Phosgen schon weitgehend oder vollständig abreagiert haben.

Mit der Menge von Kettenabbrechern kann die relative Lösungsviskosität erfindungsgemäßer aromatischer Polyester und Polyestercarbonate variiert werden. Diese liegt im allgemeinen im Bereich von 1,18 bis 2,0, vorzugsweise von 1,2 bis 1,5 (gemessen an 0,5 gew.-%igen Lösungen in Dichlormethan bei 25 °C).

Bei den erfindungsgemäß einsetzbaren Verzweigungsmitteln kann es sich z.B. um 3- oder höherfunktionelle Carbonsäurechloride, wie Trimesinsäuretrichlorid, Cyanursäuretrichlorid, 3,3',4,4'-Benzophenon-tetracarbonsäuretetrachlorid, 1,4,5,8-Naphthalintetracarbonsäuretetrachlorid oder Pyromellitsäuretetrachlorid oder um 3- oder höherfunktionelle Phenole wie Fluoroglucin, 4,6-Dimethyl-2,4,6-tri-(4-hydroxyphenyl)-hepten-2, 4,6-Dimethyl-2,4,6-tri-(4-hydroxyphenyl)-heptan, 1,3,5-Tri-(4-hydroxyphenyl)-benzol, 1,1,1-Tri-(4-hydroxyphenyl)-ethan, Tri-(4-hydroxyphenyl)-phenylmethan, 2,2-Bis-[4,4-bis-(4-hydroxyphenyl)-cyclohexyl]-propan, 2,4-Bis-(4-hydroxyphenyl-isopropyl)-phenyl, Tetra-(4-hydroxyphenyl)-methan, 2,6-Bis-(2-hydroxy-5-methyl-benzyl)-4-methyl-phenyl, 2-(4-Hydroxyphenyl)-2-(2,4-dihydroxyphenyl)-propan, Tetra-[4-(4-hydroxyphenyl-isopropyl)-phenoxy]-methan oder 1,4-Bis-[(4,4"-Dihydroxytriphenyl)-methyl]-benzol handeln. Verzweigungsmittel können z.B. in Mengen von 0,01 bis 1,0 Mol-%, bezogen auf eingesetzte Bisphenole (bei phenolischen Typen) oder bezogen auf eingesetztes Iso-und Terephthalsäuredichlorid (bei Carbonsäurechlorid-Typen) verwendet werden. Phenolische Verzweigungsmittel können mit den Bisphenolen vorgelegt, Carbonsäurechlorid-Verzweigungsmittel können zusammen mit den Carbonsäuredichloriden eingetragen werden.

Die Herstellung erfindungsgemäßer Polyester und Polyestercarbonate erfolgt vorzugsweise unter intensivem Rühren bei Temperaturen im Bereich von 0 bis 40 °C, insbesondere 15 bis 30 °C.

Nach Beendigung der Reaktion kann man den hergestellten Polyester bzw. das hergestellte Polyestercarbonat z.B. gewinnen, indem man die organische Phase des Reaktionsgemisches abtrennt, sie mit Wasser oder verdünnter Säure neutralwäscht, trocknet und das oder die Lösungsmittel im Vakuum abzieht.

Die erfindungsgemäßen Polyester und Polyestercarbonate können z.B. nach üblichen Verfahren in Spritzgießmaschinen zu Formkörpern oder in Extrudern zu Halbzeugen verarbeitet werden oder in Form von Lösungen appliziert oder aus der Schmelze oder aus der Lösung zu Fasern versponnen werden.

Erfindungsgemäße Polyester und Polyestercarbonate zeichnen sich durch eine Reihe von besonderen Eigenschaften aus, wie z.B. niedriger Brechungsindex, geringe Wasseraufnahme, ausgezeichnete Brandwidrigkeit, ausgezeichnete Löslichkeit in einer großen Anzahl organischer Lösungsmittel und hohe thermische Belastbarkeit und übertreffen dabei die bereits bekannten fluorhaltigen Polyester. Erfindungsgemäße Polyester und Polyestercarbonate sind daher vielseitig verwendbar, z.B. als Spritzgußartikel, Extrusionsartikel, Fasern, Folien, Überzügen und Lacken z.B. in der Lichttechnik, Elektrotechnik und/oder bei elektronischen Bauteilen.

Beispiele

Allgemeine Beschreibung der Herstellungsverfahren

a) Herstellung von Polyestern

In einer Lösung aus 10 g NaOH in 600 ml Wasser wurden 0,1 Mol des betreffenden Bisphenols oder Bisphenolgemisches unter Zusatz von 400 ml Methylenchlorid und 0,5 mmol Triphenyl-ethyl-phosphoniumbromid gelöst. In die intensiv gerührte Mischung wurden innerhalb von 15 Minuten gleichzeitig 51,7 g einer 40 %igen Lösung von Iso- und/oder Terephthalsäuredichlorid in Chlorbenzol (entsprechend 0,1 Mol Dicarbonsäuredichlorid) und eine Lösung von 2 mmol Phenol in 50 ml Methylenchlorid zulaufen gelassen, wobei die Temperatur 22 °C nicht überstieg. Nach einer Stunde wurde die organische Phase abgetrennt, mit verdünnter Phosphorsäure und Wasser neutralgewaschen, getrocknet und die Lösungsmittel im Vakuum abgedampft.

b) Herstellung von Polyestercarbonaten

In einer Lösung von 20 g NaOH in 600 ml Wasser wurden 0,1 Mol des betreffenden Bisphenols oder Bisphenolgemisches unter Zusatz von 400 ml Methylenchlorid und 0,5 mmol Triethyl-benzyl-ammoniumchlorid gelöst. In die intensiv gerührte Mischung wurden innerhalb von 15 Minuten gleichzeitig die berechnete Menge einer 40 %igen Lösung von Iso- und/oder Terephthalsäuredichlorid in Chlorbenzol und eine Lösung von 2 mmol Phenol in 50 ml Methylenchlorid zulaufen gelassen und eine Stunde nachgerührt, wobei die Temperatur 22 °C nicht überstieg. Danach erfolgte unter fortgesetztem Rühren die Einleitung von Phosgen, wobei die Gesamtmenge an Dicarbonsäuredichloriden und Phosgen stets 0,1 Mol betrug. Die Temperatur wurde zwischen 20 und 22 °C und der pH-Wert durch Zugabe von 40 %iger NaOH auf 12 bis 13 gehalten. Nach der Phosgeneinleitung wurden 0,1 ml Triethylamin zugesetzt und noch 1 Stunde nachgerührt. Die Aufarbeitung erfolgte dann wie bei den Polyestern.

Im einzelnen wurden folgende Herstellungsbeispiele durchgeführt, wobei die jeweils angegebenen relativen Molmengen der verschiedenen Stoffe eingesetzt und die jeweils angegehenen relativen Lösungsviskositäten ($\eta_{rel}$) in 0,5 gew.-%igen Lösungen des jeweils hergestellten Produkts in Dichlormethan bei 25 °C gemessen wurde. Die Details sind aus Tabelle 1 ersichtlich.

Tabelle 1

| Beispiel Nr. | BPA | BPAF | BHBOFCP | Terephthalsäuredichlorid | Isophthalsäuredichlorid | Phosgen | ηrel |
|---|---|---|---|---|---|---|---|
| 1 | 100 | 0 | 0 | 47,5 | 47,5 | 5 | 1,32 |
| 2 | 100 | 0 | 0 | 40 | 40 | 20 | 1,30 |
| 3 | 95 | 5 | 0 | 50 | 50 | 0 | 1,36 |
| 4 | 90 | 10 | 0 | 50 | 50 | 0 | 1,38 |
| 5 | 80 | 20 | 0 | 50 | 50 | 0 | 1,39 |
| 6 | 95 | 0 | 5 | 50 | 50 | 0 | 1,35 |
| 7 | 90 | 0 | 10 | 50 | 50 | 0 | 1,32 |
| 8 | 80 | 0 | 20 | 50 | 50 | 0 | 1,39 |
| 9 | 0 | 100 | 0 | 47,5 | 47,5 | 5 | 1,36 |
| 10 | 0 | 0 | 100 | 47,5 | 47,5 | 5 | 1,34 |
| 11 | 0 | 0 | 100 | 100 | 0 | 0 | 1,29 |
| 12 | 100 | 0 | 0 | 100 | 0 | 0 | 1,31 |
| 13 | 0 | 100 | 0 | 100 | 0 | 0 | 1,28 |

BPA = Bisphenol A; BPAF = Bistrifluormethyl-bisphenol A; BHBOFCP = 1,1-Bis-(4-hydroxybenzyl)-octafluorcyclopentan. Die Beispiele 6, 7, 8, 10 und 11 sind erfindungsgemäß, die anderen dienen zum Vergleich

Beispiele 14 bis 18

Die Löslichkeiten erfindungsgemäßer und nicht-erfindungsgemäßer Polyester und Polyestercarbonate wurde wie aus Tabelle 2 ersichtlich ermittelt. Zu vergleichen sind dabei Produkte ähnlicher Zusammensetzung, also die Beispiele 14, 15 und 16 untereinander und die Beispiele 17 und 18 untereinander, nicht jedoch Produkte mit sehr unterschiedlicher Zusammensetzung, also nicht die Beispiele 16 und 17 untereinander.

In Tabelle 2 bedeutet

| | |
|---|---|
| - | nicht löslich |
| 0 | wenig löslich |
| + | löslich |
| + + | leicht löslich. |

**Tabelle 2**

| Beispiel Nr. | Produkt aus Beispiel Nr. | Acetonitril | Diglyme | Methylglykol-acetat | Aceton | Methylethyl-keton | Essig-ester |
|---|---|---|---|---|---|---|---|
| 14 | 1 | - | 0 | - | - | - | - |
| 15 | 5 | - | + | 0 | 0 | 0 | 0 |
| 16 | 8* | - | + | 0 | 0 | + | 0 |
| 17 | 9 | - | ++ | ++ | + | ++ | ++ |
| 18 | 10* | 0 | ++ | ++ | ++ | ++ | ++ |

* erfindungsgemäße Produkte

Beispiele 19 bis 21

Es wurde der Brechungsindex $n_D^{20}$ und die Abbé-Zahl eines erfindungsgemäßen Produktes und von Vergleichsprodukten gemessen. Einzelheiten können der Tabelle 3 entnommen werden. Es zeigte sich, daß

erfindungsgemäße Produkte gleichzeitig einen niederen Brechungsindex und eine niedere Abbé-Zahl aufweisen.

Tabelle 3

| Beispiel Nr. | Produkt aus Beispiel Nr. | Brechungsindex $n_D^{20}$ | Abbé-Zahl |
|---|---|---|---|
| 19 | 1 | 1,605 | 26 |
| 20 | 9 | 1,5582 | 31 |
| 21 | 10* | 1,5494 | 30 |

* erfindungsgemäßes Produkt

Beispiele 22 bis 24

Es wurde die Wasseraufnahme eines erfindungsgemäßen Produktes und von Vergleichsprodukten nach der Lagerung in Wasser gemessen. Einzelheiten können der Tabelle 4 entnommen werden.

Tabelle 4

| Beispiel Nr. | Produkt aus Beispiel Nr. | Wasseraufnahme (Gew.-%) nach 4 Stunden | 4 Tagen |
|---|---|---|---|
| 22 | 1 | 0,15 | 0,19 |
| 23 | 5 | 0,09 | 0,10 |
| 24 | 8* | 0,06 | 0,09 |

* erfindungsgemäßes Produkt

Beispiele 25 bis 27

Es wurde die Brandwidrigkeit eines erfindungsgemäßen Produktes und von Vergleichsprodukten gemessen. Einzelheiten können der Tabelle 5 entnommen werden.

Tabelle 5

| Beispiel Nr. | Produkt aus Beispiel Nr. | Weiterbrenndauer (sec.) |
|---|---|---|
| 25 | 1 | 15 |
| 26 | 5 | 4 |
| 27 | 8* | 0 |

* erfindungsgemäß

Beispiele 28 bis 33

Es wurde die thermische Beständigkeit von erfindungsgemäßen und Vergleichsprodukten durch Bestimmung der Gewichtsverluste bei 550° C und 650° C mittels TGA gemessen. Dabei betrugen die Heizrate 20° C pro Minute. Die Messung wurde an Luft durchgeführt. Einzelheiten können der Tabelle 6 entnommen werden.

Tabelle 6

| Beispiel Nr. | Produkt aus Beispiel Nr. | Gewichtsverlust (%) bei 550° C | 650° C |
|---|---|---|---|
| 28 | 4 | 53,5 | 35,5 |
| 29 | 7* | 48 | 40,5 |
| 30 | 5 | 48 | 43 |
| 31 | 8* | 43 | 45 |
| 32 | 9 | 35 | 58 |
| 33 | 10* | 30 | 63 |

* erfindungsgemäße Produkte

Zu vergleichen sind nur die Beispiele 28 mit 29, 30 mit 31 und 32 mit 33, da sie sich jeweils auf

Produkte ähnlicher Zusammensetzung beziehen. Es zeigte sich, daß sich erfindungsgemäße Produkte bei höherer Temperatur zersetzen.

**Patentansprüche**

1. Aromatische Polyester und Polyestercarbonate der Formel (I)

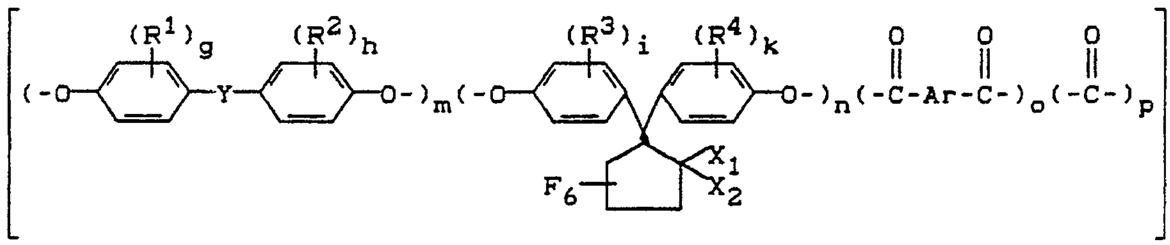

in der

| | |
|---|---|
| l | für eine ganze Zahl von 2 bis 100 steht, |
| m, n, o und p | für die Molzahlen der jeweiligen Komponenten stehen und folgende Bedingungen erfüllen<br><br>$p + o = m + n$<br>$p : (o + p) = 0$ bis 0,8<br>$n : (m + n) = 0{,}001$ bis 1 |
| Y | für eine Einfachbindung, einen $C_1$-$C_7$-Alkylenrest, einen $C_1$-$C_7$-Alkylidenrest, einen $C_5$-$C_{12}$-Cycloalkylenrest, einen $C_5$-$C_{12}$-Cycloalkylidenrest, einen $C_6$-$C_{14}$-Alkylcycloalkylidenrest, Sauerstoff, Schwefel, S=O, $SO_2$ oder C=O steht, |
| $X_1$ und $X_2$ | unabhängig voneinander für Fluor oder Chlor stehen, |
| $R^1$ bis $R^4$ | unabhängig voneinander für je eine $C_1$-$C_4$-Alkylgruppe oder ein Halogenatom stehen, |
| g bis k | unabhängig voneinander Null oder eine ganze Zahl von 1 bis 4 bedeuten und |
| Ar | meta- und/oder para-Phenylen bedeutet, wobei der Anteil an meta-Phenylen kleiner ist als 10 %, wenn m und p gleichzeitig Null sind. |

2. Aromatische Polyester nach Anspruch 1, dadurch gekennzeichnet, daß

| | |
|---|---|
| l | für eine ganze Zahl von 15 bis 100 und |
| p | für Null stehen, |
| m, n und o | für die Molzahlen der jeweiligen Komponenten stehen und folgende Bedingungen erfüllen<br><br>$o = m + n$<br>$n: (m + n) = 0{,}05$ bis 0,99, |
| $X_1$ und $X_2$ | für Fluor stehen |
| i und k | für Null stehen und |
| Ar | meta- und/oder para-Phenylen bedeutet, wobei das Mol-Verhältnis von meta- zu para-Phenylen im Bereich 7:3 bis 3:7 liegt. |

3. Aromatische Polyestercarbonate nach Anspruch 1, dadurch gekennzeichnet, daß

| | |
|---|---|
| l | für eine ganze Zahl von 15 bis 100 und |
| m, n, o und p | für die Molzahl der jeweiligen Komponente stehen und folgende Bedingungen erfüllen<br><br>$p + o = m + n$ |

$p : (o + p) = 0,01$ bis $0,5$
$n : (n + m) = 0,05$ bis $1$,

| | |
|---|---|
| $X_1$ und $X_2$ | für Fluor stehen und |
| i und k | für Null stehen und |
| Ar | meta- und/oder para-Phenylen bedeutet, wobei das Mol-Verhältnis von meta- zu para-Phenylen im Bereich 7:3 bis 3:7 liegt. |

**4.** Verfahren zur Herstellung von Polyestern und Polyestercarbonaten des Anspruchs 1, dadurch gekennzeichnet, daß man nach dem Zweiphasengrenzflächenverfahren n Mole Bisphenole der Formel (II)

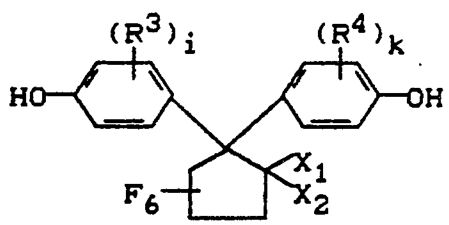

(II),

in der die verwendeten Symbole die in Anspruch 1 angegebene Bedeutung haben,

gegebenenfalls unter Zusatz von m Molen Bisphenolen der Formel (III)

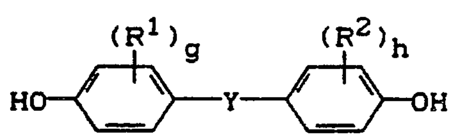

(III),

in der die verwendeten Symbole die in Anspruch 1 angegebene Bedeutung haben,

in wäßrig-alkalischer Phase mit o Molen Iso- und/oder Terephthalsäuredichlorid, wobei der Anteil an Isophthalsäuredichlorid dann kleiner ist als 10 Mol-%, wenn m und p gleichzeitig Null sind,

gegebenenfalls unter Zusatz von p Molen Phosgen,

sowie gegebenenfalls unter Zusatz von Katalysatoren, Kettenabbrechern, Farbverbesserern und/oder Verzweigungsmitteln

in organischer Phase miteinander umsetzt und dabei die Bedingungen einhält

$p + o = m + n$
$p : (o + p) = 0$ bis $0,8$
$n : (m + n) = 0,001$ bis $1$.

**5.** Verfahren nach Anspruch 4, dadurch gekennzeichnet, daß man als Farbverbesserer Natriumborhydrid oder Natriumhydrogensulfit einsetzt.

**6.** Verfahren nach Anspruch 4, dadurch gekennzeichnet, daß man als Katalysatoren quarternäre Ammoniumverbindungen, quarternäre Phosphoniumverbindungen oder tertiäre Amine einsetzt.

**7.** Verfahren nach Anspruch 4, dadurch gekennzeichnet, daß man als Kettenabbrecher Phenol, $C_1$- bis

$C_{12}$-Alkylphenole, halogenierte Phenole, Hydroxydiphenyl, Naphthole, Chlorkohlensäureester solcher phenolischer Verbindungen oder gegebenenfalls mit $C_1$- bis $C_{12}$-Alkylgruppen und/oder Halogenatomen substituierte Chloride aromatischer Monocarbonsäuren einsetzt.

**8.** Verfahren nach Anspruch 4, dadurch gekennzeichnet, daß man als Verzweigungsmittel 3- oder höherfunktionelle Carbonsäurechloride oder Phenole einsetzt.

**9.** Verfahren nach Ansprüchen 4 bis 8, dadurch gekennzeichnet, daß man unter intensivem Rühren bei 0 bis 40 °C arbeitet.

**10.** Verwendung von Polyestern und Polyestercarbonaten des Anspruchs 1 für die Herstellung von Spritzgußartikeln, Extrusionsartikeln, Fasern, Folien, Überzügen und Lacken.